(19) Europäisches Patentamt
European Patent Office
Office européen des brevets

(11) **EP 2 521 921 B1**

(12) **FASCICULE DE BREVET EUROPEEN**

(45) Date de publication et mention
de la délivrance du brevet:
**26.02.2014 Bulletin 2014/09**

(21) Numéro de dépôt: **11701472.0**

(22) Date de dépôt: **07.01.2011**

(51) Int Cl.:
*G01P 3/42* (2006.01)       *G08G 1/042* (2006.01)
*G08G 1/052* (2006.01)       *G01P 3/66* (2006.01)

(86) Numéro de dépôt international:
**PCT/EP2011/050185**

(87) Numéro de publication internationale:
**WO 2011/083149 (14.07.2011 Gazette 2011/28)**

(54) **DISPOSITIF DE MESURE DE LA VITESSE DE DEPLACEMENT D'UN OBJET DEFORMANT LES LIGNES DU CHAMP MAGNETIQUE TERRESTRE**

VORRICHTUNG ZUM MESSEN DER VERSCHIEBUNGSGESCHWINDIGKEIT EINES OBJEKTS, DAS DIE LINIEN DES ERDMAGNETFELDS VERFORMT

DEVICE FOR MEASURING THE SPEED OF DISPLACEMENT OF AN OBJECT DEFORMING THE LINES OF THE TERRESTRIAL MAGNETIC FIELD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.01.2010 FR 1000063**

(43) Date de publication de la demande:
**14.11.2012 Bulletin 2012/46**

(73) Titulaire: **Commissariat à l'Énergie Atomique et aux Énergies Alternatives
75015 Paris (FR)**

(72) Inventeurs:
• **ROBINET, Antoine**
**F-38210 Tullins (FR)**
• **BLANPAIN, Roland**
**F-38380 Entre-Deux-Guiers (FR)**

(74) Mandataire: **Croonenbroek, Thomas Jakob et al
Innovincia
310 avenue Berthelot
69008 Lyon (FR)**

(56) Documents cités:
**EP-A1- 0 629 861       DE-U1-202008 000 437
FR-A1- 2 768 230**

• **CARITU, YANIS; FLAMENT, BRUNO; VACHERAND, FRANCOIS; BLANPAIN, ROLAND: "Détection et localisation en temps réel d'un mobile ferromagnétique", 15° COLLOQUE SUR LE TRAITEMENT DU SIGNAL ET DES IMAGES, FRA,, septembre 1995 (1995-09), pages 1307-1310, XP002595109, cité dans la demande**

**Description**

L'invention concerne un dispositif de mesure de la vitesse de déplacement d'un objet déformant les lignes du champ magnétique terrestre.

La mesure de vitesse de véhicules est une préoccupation constante pour assurer la sécurité routière. Ainsi, des études ont démontré que le nombre d'accidents de la route est corrélé directement avec la moyenne de vitesse des véhicules.

Aujourd'hui, plusieurs dispositifs existent pour mesurer la vitesse des véhicules automobiles :

On note par exemple les dispositifs radar fixes ou mobiles. Ces installations qui permettent une mesure précise de la vitesse, sont très couteuses et complexes.

Les dispositifs à vision laser utilisent l'effet Doppler pour la mesure de la vitesse et permettent également une mesure précise de la vitesse des véhicules. Toutefois, il est nécessaire qu'un opérateur vise le véhicule et que le conducteur fautif soit interpellé rapidement après son infraction.

Par ailleurs, il existe aussi des boucles inductives installées dans la chaussée. Cependant, la précision de la mesure n'est pas optimale et le coût d'installation d'une boucle inductive dans la chaussée est une intervention lourde et très couteuse. Par ailleurs, ces boucles intégrées dans la chaussée sont soumis à des contraintes importantes, en particulier par des camions poids - lourds, réduisant leurs durées de vie.

Les documents EP 0 629 861, US 6 208 268 et US 5954 299 décrivent des dispositifs de mesure de la vitesse de véhicules terrestres, comportant deux capteurs disposés l'un derrière l'autre à une distance prédéterminée le long d'une route à côté de celle -ci et comportant une unité d'exploitation raccordée aux capteurs qui détermine le déphasage ou le décalage dans le temps des signaux de sorties électriques des capteurs et calcule, à partir de ceci, avec la distance des capteurs, la vitesse des véhicules.

Les capteurs sont des magnétomètres qui détectent la déformation du champ magnétique terrestre par le véhicule (ferromagnétique dans son ensemble).

Bien que ces capteurs soient d'un prix de revient abordable, ces installations souffrent d'un manque de précision, de sorte que son utilisation, notamment dans des zones urbaines nécessitant une mesure de vitesse plus précise, n'est pas adaptée.

Le document DE 102 0 658 décrit une installation analogue avec un portique sur lequel sont installées pour chaque chaussée deux magnétomètres, l'un derrière l'autre en direction de circulation des véhicules.

Le document US 3 860 869 décrit un dispositif de mesure de la vitesse d'un véhicule terrestre avec un seul magnétomètre qui détecte la vitesse le long d'un trajet rectiligne.

Toutefois, cette solution décrite avec des véhicules militaires n'est pas adaptée pour une situation de surveillance de trafic où les véhicules peuvent se suivre de près.

L'invention a donc pour objectif de proposer un dispositif de mesure de la vitesse de déplacement d'un objet ferromagnétique déformant les lignes du champ magnétique terrestre.

À cet effet, l'invention a pour objet un dispositif de mesure de la vitesse de déplacement d'un objet déformant les lignes du champ magnétique terrestre, tel qu'un véhicule automobile, caractérisé en ce qu'il comprend

- un premier et second magnétomètres disposés de part et d'autre d'une voie de déplacement dudit objet et sensiblement perpendiculaire à celle-ci, les magnétomètres étant configurés pour mesurer la déformation du champ magnétique terrestre dudit objet se déplaçant sur ladite voie, et
- une unité de traitement configurée pour extraire pour chaque magnétomètre une valeur de mesure correspondant au quotient de la distance de l'objet par rapport au magnétomètre, divisée par la vitesse de déplacement de l'objet, et pour calculer la vitesse de l'objet à partir de ces valeurs de mesure et la disposition géométrique des magnétomètres l'un par rapport à l'autre et par rapport à la voie de déplacement.

Le dispositif de mesure de la vitesse peut en outre comporter une ou plusieurs caractéristiques suivantes, prises séparément ou en combinaison :

- les magnétomètres sont des magnétomètres fluxgate mono-axe, bi-axe, tri-axe, scalaires ou en gradient,
- les magnétomètres sont installés en hauteur par rapport à la voie de déplacement,
- les magnétomètres sont installés à une hauteur comprise entre 1,5 m et 3m.
- chaque magnétomètre est porté par un panneau de signalisation,
- l'unité de traitement est en outre configurée pour déterminer la distance entre deux objets qui se suivent à partir de la vitesse de déplacement du deuxième objet et le temps entre les passages des deux objets entre les magnétomètres,
- l'unité de traitement comporte un comparateur de la vitesse calculée avec une vitesse de consigne qui transmet un signal d'alerte en cas de dépassement de vitesse,
- l'unité de traitement comporte un module d'identification de l'objet en déplacement par sa signature magnétique selon un ensemble de signatures et d'objets correspondants enregistrés et la vitesse de consigne est adaptée en fonction de l'objet détecté,
- l'unité de traitement comporte un comparateur de l'interdistance calculée entre deux objets avec une interdistance de consigne qui transmet un signal d'alerte si l'interdistance est inférieure ou égal à l'interdistance de consigne.

L'invention concerne également une installation de mesure de vitesse d'un véhicule automobile, caractérisée en ce qu'elle comprend un dispositif de mesure tel que défini ci-dessus, une unité d'alimentation électrique et une unité de transmission par radiofréquence des résultats de mesure.

L'invention concerne encore un panneau de signalisation destiné à être utilisé pour une installation tel que défini ci-dessus, caractérisé en ce qu'il porte un magnétomètre.

Selon un aspect, le panneau est réalisé en un matériau amagnétique. Selon un autre aspect, le panneau comporte un support amagnétique du magnétomètre, fixé à la structure métallique du panneau à une distance prédéfinie.

D'autres caractéristiques et avantages de l'invention ressortiront de la description suivante, donnée à titre d'exemple, sans caractère limitatif, en regard des dessins annexés parmi lesquels :

- la figure 1 montre un schéma simplifié en perspective d'un dispositif selon l'invention
- la figure 2 montre un schéma synoptique de l'installation selon l'invention avec le dispositif de mesure selon l'invention.

Dans ces figures, les éléments identiques portent les mêmes références.

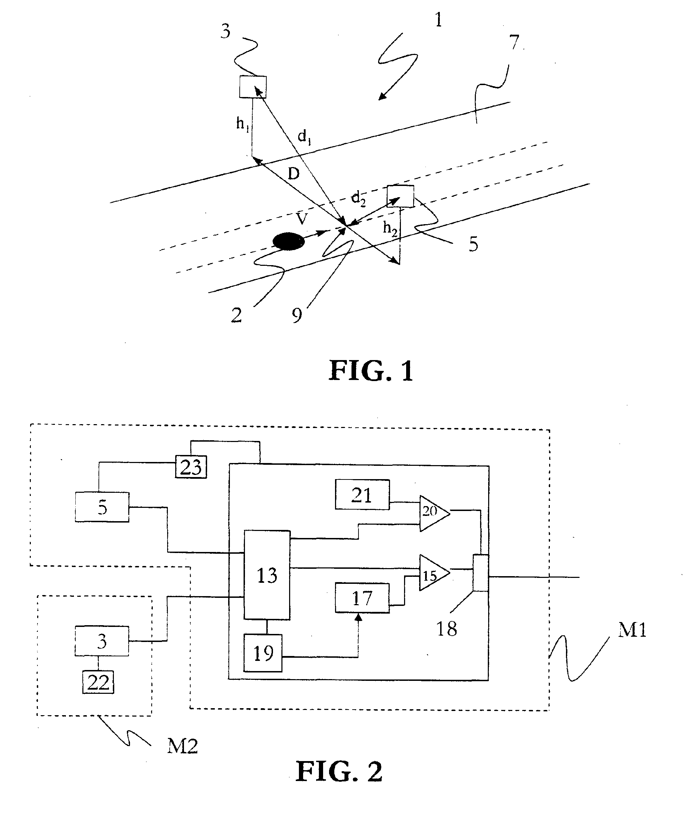

La figure 1 illustre un dispositif 1 de mesure de la vitesse de déplacement d'un objet 2 déformant les lignes du champ magnétique terrestre, comme un objet ferromagnétique tel qu'un véhicule automobile. Il peut aussi s'agir d'un objet non ferromagnétique, mais porteur d'un aimant, d'un électroaimant ou d'un générateur de champ magnétique alternatif.

Par véhicule automobile, on comprend aussi bien des voitures ou des camions que des trains ou encore des avions, circulant par exemple sur une piste de l'aéroport, tel qu'une piste de décollage ou d'atterrissage.

Ce dispositif comprend au moins un premier 3 et second 5 magnétomètres disposés de part et d'autre d'une voie de déplacement 7 dudit objet et sensiblement perpendiculaire à celle-ci.

De part leur conception, les magnétomètres 3 et 5 sont configurés pour mesurer la déformation du champ magnétique terrestre au passage dudit objet se déplaçant sur ladite voie, c'est-à-dire au passage d'un véhicule.

La voie de déplacement 7 est dans le présent cas une route à deux voies à sens unique ou à double sens, mais bien entendu, on peut également envisager une autoroute à 4 voies où les magnétomètres sont disposés d'une part sur le bord et d'autre part sur le terre-plein au milieu de l'autoroute.

Par des blindages magnétiques, les magnétomètres sont d'ailleurs aussi conçus pour viser pour la mesure une ligne de mesure qui se confond avec la flèche 9 indiquant la distance D qui est la distance entre les deux magnétomètre projetée sur le sol.

On constate que cette ligne de visée est sensiblement perpendiculaire par rapport à la voie 7.

Ce dispositif est capable de mesurer la composante normale V de la vitesse, c'est-à-dire la composante de la vitesse perpendiculaire à la ligne de visée 9, ceci dans les deux sens.

On peut utiliser des magnétomètres fluxgate, mono-axe, bi-axe, tri-axe, scalaires ou en gradient, ces derniers étant avantageux pour le rejet d'effets parasites sur les résultats de mesure.

Comme on le voit schématiquement sur la figure 1, les magnétomètres sont installés en hauteur ($h_1$ pour le magnétomètre 3 et $h_2$ pour le magnétomètre 5) par rapport à la voie de déplacement 7, par exemple à une hauteur comprise entre 1,5 m et 3m.

Il s'avère judicieux de faire porter chaque magnétomètre 3, 5 par un panneau de signalisation, comme par exemple un panneau de limitation de vitesse à 50km/h. Ceci est avantageux étant donné que dans la plupart des cas, on a deux panneaux à la même hauteur sur une route.

En effet, pour une autoroute, on doit indiquer la vitesse limite des deux côtés de la double voies ; pour une route à double sens, il s'agit pour l'un du panneau indiquant l'entrée dans la zone de limitation de vitesse et pour l'autre du panneau indiquant la sortie de la zone de limitation de vitesse.

Le panneau peut être réalisé, au moins partiellement au niveau de la partie supportant le magnétomètre, en un matériau amagnétique ou encore il peut s'agit d'un panneau à structure métallique et comportant un support amagnétique du magnétomètre, fixé à la structure métallique du panneau à une distance prédéfinie.

Les magnétomètres 3 et 5 sont reliés à une unité de traitement 11 (voir figure 2).

Cette dernière est configurée pour extraire dans un module 13 de chaque magnétomètre 3, 5 une valeur de mesure correspondant au quotient de la distance de l'objet par rapport au magnétomètre, divisée par la vitesse de déplacement de l'objet, c'est-à-dire une valeur $d_1/V$ pour le magnétomètre 3 et $d_2/V$ pour le magnétomètre 5. $d_1$ et $d_2$ sont respectivement les distances minimales (également appelé «cpa» pour «closest point approach » en anglais) de l'objet 2 par rapport aux magnétomètres 3 et 5 lors du passage entre les magnétomètres.

Ceci est réalisé en mesurant la signature magnétique de l'objet en mouvement, c'est-à-dire l'évolution du signal de perturbation dans le temps et en y appliquant par projection de signaux dipolaires sur une base orthonormée.

En effet, chaque magnétomètre mesure le champ magnétique terrestre modifié par le déplacement de l'objet 2. En réponse, il génère trois signaux électriques proportionnels, respectivement, aux composantes x, y et z du champ magnétique mesurées le long des directions X, Y et Z.

Dans la configuration donnée, le traitement des signaux peut être simplifié étant donné qu'il s'agit, au moins en première approximation, d'un mouvement rectiligne uniforme. On suppose par là également que la vitesse est inconnue mais en première approximation constante.

Dans ce cas, l'objet 2 présente toujours la même orientation dans le champ terrestre et son moment induit est constant.

Il en résulte que le moment total qui est la somme du moment permanent et du moment induit est invariant en première approximation lors du passage entre les magnétomètres 3 et 5.

Pour obtenir les valeurs $d_1/V$ pour le magnétomètre 3 et $d_2/V$ pour le magnétomètre 5, on se réfère à un filtrage adapté sur une base de fonctions d'Anderson qui est par exemple décrit dans les documents suivants, incorporés par référence :

- R. Blanpain, « Traitement en temps réel du signal issu d'une sonde magnétométrique pour la détection d'anomalie magnétique », thèse I.N.P.G., Octobre 1979.
- « Détection et localisation en temps réel d'un mobile ferromagnétique », Y. CARITU, B. FLAMENT, F. VACHERAND, R. BLANPAIN, quinzième colloque GRETSI à Juan les Pins, du 18 au 21 septembre 1995
- « Comparaison de méthodes de classification : application à l'identification d'objets ferromagnétiques sous-marins, A. QUINQUIS et E. RADOI, Revue Traitement du signal 1998 - Volume 15, N° 3.

En effet, dans le cas d'un mouvement rectiligne uniforme, le signal mesuré S (t) peut se décomposer sur une base de trois fonctions rationnelles orthonormées $e_i$ (t) (i= 0, 1, 2) connue sous le nom des fonctions d'Anderson :

$$S_i(t) = \sum_{i=0}^{i=2} s_{ji} e_i \left( \frac{t}{D_j/V} \right)$$

où $s_{ij}$ sont des constantes de normalisation.

Dans cette configuration, t=0 correspond à l'instant où l'objet 2 est le plus proche du magnétomètre 3 ou 5 de mesure (également appelé « cpa » pour « closest point approach » en anglais).

La projection de la séquence $S_j(t)$ sur une des fonctions $e_i(t)$ est par exemple réalisée en calculant le coefficient $s_{ij}$ de corrélation entre la séquence $S_i(t)$ et la fonction $e_i(t)$. Ce calcul est détaillé dans les documents cités ci-dessus.

Plus précisément, chaque fonction $e_i(t)$ dépend non seulement du temps t mais aussi du rapport V/D. Au préalable, un jeu de j valeurs du rapport $V/D_j$ est construit. La fonction $e_i(t)$ obtenue pour une valeur particulière du

rapport $V/D_j$ est notée $e_{ij}(t)$, où i est l'indice de la fonction d'Anderson (i =0, 1 ou 2) et j est l'indice d'une valeur particulière du rapport $V/D_j$ choisie dans le jeu de valeur construit au préalable. Les fonctions $e_{ij}(t)$ sont pré-enregistrées.

La séquence S(t) est projetée sur chacune des fonctions $e_{ij}(t)$ enregistrées. On obtient ainsi j coefficients $s_{ij}$ de corrélation entre, cette séquence S(t) et la fonction $e_{ij}(t)$ correspondante.

Pour chaque indice j, une énergie $E_j(t)$ est calculée à l'aide de la relation suivante :

$$E_j(t) = (s_{0j})^2 + (s_{1j})^2 + (s_{2j})^2$$

Puis, on sélectionne une valeur m de l'indice j qui maximisent l'énergie $E_j(t)$. Cette valeur m correspond à un jeu de coefficients $s_{im}$.

En déterminant de façon itérative la corrélation maximale, on peut obtenir respectivement les valeurs $d_1/V$ pour le magnétomètre 3 et $d_2/V$ pour le magnétomètre 5

Lors de l'installation du dispositif 1, les hauteurs $h_1$, $h_2$ ainsi que la distance D sont mesurées avec précision.

Pour calculer par le module 13 la vitesse de l'objet 2 à partir de ces valeurs de mesure et la disposition géométrique des magnétomètres l'un par rapport à l'autre et par rapport à la voie de déplacement, on utilise de plus l'équation suivante :

$$\sqrt{(d_1^2 - h_1^2)} + \sqrt{(d_2^2 - h_2^2)} = D$$

Où $d_1$ et $d_2$ sont respectivement les distances de l'objet 2 par rapport aux magnétomètres 3 et 5.

On obtient donc un système à trois équations avec trois variables inconnus que l'on peut résoudre de façon numérique pour obtenir la vitesse V de déplacement de l'objet, c'est-à-dire du véhicule automobile.

L'unité de traitement 11, en particulier le module 13, est en outre configurée pour déterminer la distance entre deux objets (véhicules) qui se suivent à partir de la vitesse de déplacement du deuxième objet et le temps entre les passages des deux objets entre les magnétomètres.

Puis, l'unité de traitement 11 peut comporter un comparateur 15 de la vitesse calculée avec une vitesse de consigne mémorisée dans une mémoire 17, et qui transmet un signal d'alerte par exemple par une unité 18 de transmission par radiofréquence des résultats de mesure en cas de dépassement de vitesse.

Cette alerte peut être un simple signal lumineux d'avertissement quelques dizaines de mètres plus loin ou un affichage de la vitesse du véhicule.

Couplé à un poste d'identification par caméra, les informations sur l'identité du véhicule et le dépassement de la limite de vitesse autorisée peuvent être transmises vers un centre de sécurité des autorités publiques.

Dans une version plus évoluée, l'unité de traitement 11 comporte un module d'identification 19 de l'objet en déplacement par sa signature magnétique selon un ensemble de signatures et d'objets correspondants enregistrés et la vitesse de consigne dans la mémoire 17 est adaptée en fonction de l'objet détecté.

On peut donc prendre en compte des limites de vitesse sélectives, par exemple pour des camions ou bus d'un certain poids d'une part et des voitures d'autre part, par exemple dans une descente sur l'autoroute.

L'unité de traitement peut également comporter un comparateur de l'interdistance 20 calculée entre deux objets avec une interdistance de consigne mémorisée dans la mémoire 21, et qui transmet un signal d'alerte si l'interdistance est inférieure ou égal à l'interdistance de consigne.

Enfin, on prévoit que chaque magnétomètre peut disposer de sa propre source d'alimentation electrique respectivement 22 et 23, par exemple des piles ou batteries, des panneaux solaires ou encore d'autres sources d'énergie renouvelables.

Selon un aspect, l'unité de traitement 11, l'alimentation 23 et le magnétomètre 5 forment par exemple un premier module M1 et sont installés sur un même panneau de signalisation d'un côté de la route. Cet ensemble fait office de « capteur maître ». Alors que le magnétomètre 3 avec son alimentation 22 de l'autre côté de la route peuvent former un module M2 relié par radio ou de façon filaire à l'unité 11 et faisant office de « capteur esclave ».

On comprend donc que le dispositif selon l'invention permet la mesure de vitesse peu couteuse, fiable et indépendamment des conditions climatiques.

Il s'agit d'un dispositif robuste qui n'est pas soumis à l'usure par les véhicules qui passent, et qui ne nécessite que très peu d'aménagement spécifique de la route, étant donné qu'il peut s'appuyer par exemple sur des panneaux de signalisation existants. Il n'est pas non plus nécessaire d'installer des portiques spécifiques.

## Revendications

1. Dispositif (1) de mesure de la vitesse de déplacement d'un objet (2) déformant les lignes du champ magnétique terrestre, tel qu'un véhicule automobile, **caractérisé en ce qu'**il comprend

   - un premier (3) et second (5) magnétomètres disposés de part et d'autre d'une voie de déplacement (7) dudit objet et sensiblement perpendiculaire à celle-ci, les magnétomètres (3 ; 5) étant configurés pour mesurer la déformation du champ magnétique terrestre dudit objet (2) se déplaçant sur ladite voie (7), et
   - une unité de traitement (11) configurée pour extraire pour chaque magnétomètre (3 ; 5) une valeur de mesure correspondant au quotient de la distance de l'objet par rapport au magnétomètre (3 ; 5), divisée par la vitesse de déplacement de l'objet (2), et pour calculer la vitesse de l'objet à partir de ces valeurs de mesure et la disposition géométrique des magnétomètres l'un par rapport à l'autre et par rapport à la voie de déplacement.

2. Dispositif de mesure selon la revendication 1, caractérisé en en que les magnétomètres (3 ; 5) sont des magnétomètres fluxgate mono-axe, bi-axe, tri-axe, scalaires ou en gradient.

3. Dispositif de mesure selon la revendication 1 ou 2, **caractérisé en ce que** les magnétomètres (3 ; 5) sont installés en hauteur par rapport à la voie de déplacement.

4. Dispositif de mesure selon la revendication 3, **caractérisé en ce que** les magnétomètres (3 ; 5) sont installés à une hauteur comprise entre 1,5 m et 3m.

5. Dispositif de mesure selon la revendication 3 ou 4, **caractérisé en ce que** chaque magnétomètre (3 ; 5) est porté par un panneau de signalisation.

6. Dispositif de mesure selon l'une quelconque des revendications 1 à 5, **caractérisé en ce que** l'unité de traitement (11) est en outre configurée pour déterminer la distance entre deux objets qui se suivent à partir de la vitesse de déplacement du deuxième objet et le temps entre les passages des deux objets entre les magnétomètres.

7. Dispositif de mesure selon l'un quelconque des revendications 1 à 6, **caractérisé en ce que** l'unité de traitement (11) comporte un comparateur de la vitesse (15) calculée avec une vitesse de consigne qui transmet un signal d'alerte en cas de dépassement de vitesse.

8. Dispositif de mesure selon la revendication 7, **caractérisé en ce que** l'unité de traitement (11) comporte un module (19) d'identification de l'objet en déplacement par sa signature magnétique selon un ensemble de signatures et d'objets correspondants enregistrés et **en ce que** la vitesse de consigne est adaptée en fonction de l'objet détecté.

9. Dispositif de mesure selon l'une quelconque des revendication 6 et 7 à 8 prise ensemble avec la revendication 6, **caractérisé en ce que** l'unité de traitement (11) comporte un comparateur (20) de l'interdistance calculée entre deux objets avec une interdistance de consigne qui transmet un signal d'alerte si l'interdistance est inférieur ou égal à l'interdistance de consigne.

10. Installation de mesure de vitesse d'un véhicule automobile. **caractérisée en ce qu'**elle comprend un dispositif de mesure (1) selon l'une quelconque des revendications 1 à 9, une unité d'alimentation électrique (22, 23) et une unité de transmission par radiofréquence des résultats de mesure (18).

11. Panneau de signalisation adapté à l'installation selon la revendication 10, **caractérisé en ce qu'**il porte un magnétomètre selon l'une quelconque des revendications 1 à 9.

12. Panneau selon la revendication 11, **caractérisé en ce qu'**il est réalisé en un matériau amagnétique.

13. Panneau selon la revendication 11, **caractérisé en ce qu'**il comporte un support amagnétique du magnétomètre, fixé à la structure métallique du panneau à une distance prédéfinie.

**Patentansprüche**

1. Vorrichtung (1) zum Messen der Bewegungsgeschwindigkeit eines Objekts (2), das die Linien des magnetischen Erdfeldes verformt, wie eines Fahrzeugs, **dadurch gekennzeichnet, dass** sie umfasst:

   - ein erstes (3) und ein zweites (5) Magnetometer, die beiderseits der Bewegungsbahn (7) des Objekts angeordnet und im Wesentlichen auf diese senkrecht sind, wobei die Magnetometer (3; 5) derart ausgeführt sind, dass sie Verformung des Erdmagnetfeldes des Objekts (2), das sich auf der Bahn (7) bewegt, messen,
   - eine Bearbeitungseinheit (11), die derart konfiguriert ist, dass sie für jedes Magnetometer (3; 5) einen Messwert entsprechend dem Quotienten der Distanz des Objekts in Bezug zum Magnetometer (3; 5), geteilt durch die Bewegungsgeschwindigkeit des Objekts (2), und dass sie die Geschwindigkeit des Objekts aus diesen Messwerten und die geometrische Anordnung der Magnetometer in Bezug zueinander und in Bezug zur Bewegungsbahn berechnet.

2. Messvorrichtung nach Anspruch 1, **dadurch gekennzeichnet, dass** die Magnetometer (3; 5) einachsige, zweiachsige, dreiachsige, skalare oder Gradienten Fluxgate-Magnetometersind.

3. Messvorrichtung nach Anspruch 1 oder 2, **dadurch gekennzeichnet, dass** die Magnetometer (3; 5) in Bezug zur Bewegungsbahn in einer gewissen Höhe installiert sind.

4. Messvorrichtung nach Anspruch 3, **dadurch gekennzeichnet, dass** die Magnetometer (3; 5) in einer Höhe zwischen 1,5 m und 3 m installiert sind.

5. Messvorrichtung nach Anspruch 3 oder 4, **dadurch gekennzeichnet, dass** jedes Magnetometer (3; 5) von einem Verkehrsschild getragen wird.

6. Messvorrichtung nach einem der Ansprüche 1 bis 5, **dadurch gekennzeichnet, dass** die Bearbeitungseinheit (11) ferner derart konfiguriert ist, dass sie die Distanz zwischen zwei einander folgenden Objekten ausgehend von der Bewegungsgeschwindigkeit des zweiten Objekts und der Zeit zwischen den Durchgängen der beiden Objekte zwischen den Magnetometern bestimmt.

7. Messvorrichtung nach einem der Ansprüche 1 bis 6, **dadurch gekennzeichnet, dass** die Bearbeitungseinheit (11) einen Komparator der Geschwindigkeit (15), die mit einer Sollgeschwindigkeit berechnet wird, umfasst, der ein Warnsignal im Falle einer Geschwindigkeitsüberschreitung überträgt.

8. Messvorrichtung nach Anspruch 7, **dadurch gekennzeichnet, dass** die Bearbeitungseinheit (11) ein Modul (19) zur Identifikation des Objekts in Bewegung durch seine magnetische Signatur gemäß einer Gesamtheit von aufgezeichneten entsprechenden Signaturen und Objekten umfasst, und dass die Sollgeschwindigkeit in Abhängigkeit von dem erfassten Objekt angepasst wird.

9. Messvorrichtung nach einem der Ansprüche 6 und 7 bis 8 gemeinsam mit Anspruch 6, **dadurch gekennzeichnet, dass** die Bearbeitungseinheit (11) einen Komparator (20) der berechneten Zwischendistanz zwischen zwei Objekten mit einer Sollzwischendistanz umfasst, der ein Warnsignal überträgt, wenn die Zwischendistanz kleiner oder gleich der Sollzwischendistanz ist.

10. Anlage zum Messen der Geschwindigkeit eines Kraftfahrzeugs, **dadurch gekennzeichnet, dass** sie eine Messvorrichtung (1) nach einem der Ansprüche 1 bis 9, eine Stromversorgungseinheit (22, 23) und eine Funkfrequenzübertragungseinheit für die Messergebnisse (18) umfasst.

11. Verkehrsschild, das an die Anlage nach Anspruch 10 angepasst ist, **dadurch gekennzeichnet, dass** es ein Magnetometer nach einem der Ansprüche 1 bis 9 trägt.

12. Verkehrsschild nach Anspruch 11, **dadurch ge-**

**kennzeichnet, dass** es aus einem amagnetischen Material hergestellt ist.

13. Verkehrsschild nach Anspruch 11, **dadurch gekennzeichnet**, das es einen amagnetischen Träger des Magnetometers umfasst, der an der metallischen Struktur des Verkehrsschildes in einem vordefinierten Abstand befestigt ist.

**Claims**

1. A device for measuring the speed of movement of an object (2) deforming the lines of the terrestrial magnetic field, such as a motor vehicle, **characterized in that** the device comprises:

  - a first (3) and second (5) magnetometer disposed on either side of a travel route (7) of said object and substantially perpendicular to said object, the magnetometers (3; 5) being configured for measuring the deformation of the terrestrial magnetic field by said object (2) travelling over said route (7), and
  - a processing unit (11) configured for extracting, from each magnetometer (3; 5), a measurement value corresponding to a quotient defined by the distance of the object with respect to the magnetometer (3; 5) divided by the speed of movement of the object (2), and for calculating the speed of the object from these measurement values and the geometrical disposition of the magnetometers with respect to one another and with respect to the travel route.

2. The measuring device according to claim 1, **characterized in that** the magnetometers (3; 5) are single-axis, dual-axis, triple-axis fluxgate magnetometers, scalar magnetometers or gradient magnetometers.

3. The measuring device according to claim 1 or 2, **characterized in that** the magnetometers are installed high up with respect to the travel route.

4. The measuring device according to claim 3, **characterized in that** the magnetometers (3; 5) are installed at a height of between 1.5 m and 3 m.

5. The measuring device according to claim 3 or 4, **characterized in that** each magnetometer (3; 5) is carried by a road sign.

6. The measuring device according to any one of claims 1 to 5, **characterized in that** the processing unit (11) is also configured for determining the distance between two objects following one another from the speed of movement of the second object and the time between passages of the two objects between the magnetometers.

7. The measuring device according to any one of claims 1 to 6, **characterized in that** the processing unit (11) comprises a comparator for comparing the calculated speed (15) with a setpoint speed that transmits an alarm signal in the event the speed is surpassed.

8. The measuring device according to claim 7, **characterized in that** the processing unit (11) comprises a module (19) for identifying the moving object based on its magnetic signature by reference to a stored set of signatures and corresponding objects, and **in that** the setpoint speed is adjusted according to the object identified.

9. The measuring device according to any one of claims 6 and 7 to 8 taken together with claim 6, **characterized in that** the processing unit (11) comprises a comparator for comparing the interdistance calculated between two objects with a setpoint interdistance that transmits an alarm signal if the interdistance is less than or equal to the setpoint interdistance.

10. Motor vehicle speed measuring installation, **characterized in that** the installation comprises a measuring device (1) according to any one of claims 1 to 9, an electrical power supply unit (22, 23) and a transmission unit for radiofrequency transmission of the measurement results (18).

11. A road sign adapted to the installation according to claim 10, **characterized in that** the road sign carries a magnetometer according to any one of claims 1 to 9.

12. The road sign according to claim 11, **characterized in that** the road sign is made of a non-magnetic material.

13. The road sign according to claim 11, **characterized in that** the road sign comprises a non-magnetic support for the magnetometer, fixed to the metal structure of the road sign at a predefined distance.

**FIG. 1**

**FIG. 2**

## RÉFÉRENCES CITÉES DANS LA DESCRIPTION

**Documents brevets cités dans la description**

- EP 0629861 A
- US 6208268 B
- US 5954299 A
- DE 1020658
- US 3860869 A

**Littérature non-brevet citée dans la description**

- **Y. CARITU ; B. FLAMENT ; F. VACHERAND ; R. BLANPAIN.** Détection et localisation en temps réel d'un mobile ferromagnétique. *quinzième colloque GRETSI à Juan les Pins,* 18 Septembre 1995
- **A. QUINQUIS ; E. RADOI.** Comparaison de méthodes de classification : application à l'identification d'objets ferromagnétiques sous-marins. *Revue Traitement du signal,* 1998, vol. 15 (3